# EUROPEAN PATENT SPECIFICATION

(11) **EP 1 913 804 B1**
(45) Date of publication and mention of the grant of the patent: **05.01.2011**
(21) Application number: 07019504.5
(22) Date of filing: 05.10.2007
(51) Int. Cl.: A01B 59/04, B60D 1/46

(54) **Tractor hitch**
Kupplung für einen Traktor
Crochet de tracteur

(30) Priority: 21.10.2006 GB 0620996
(43) Date of publication of application: 23.04.2008
(60) Divisional application: 09161714.2
(73) Proprietor: AGCO SA, 60026 Beauvais (FR)
(72) Inventor: Baudoin, Mathieu Joel, 6000 Beauvais (FR); Deschodt, Thomas Andre Michel, 59492 Hoymille (FR); Rateau, Clement Olivier, 60480 Francastel (FR)
(74) Representative: Morrall, Roger

(56) References cited:
- EP-A- 0 485 296
- EP-A- 1 312 491
- EP-A- 1 433 628
- EP-A- 1 559 593
- DE-A1- 4 427 399
- FR-A- 2 729 816
- GB-A- 2 170 769
- US-A1- 2004 155 430

## Description

This invention relates to tractor hitches and in particular to hitches for attachment to the rear of a tractor which comprise a pair of vertically extending and laterally spaced rails between which an implement connector is secured for the attachment of an implement.

Such rear hitches are well known but cause operational problems due to the need to carry a number of different implement connectors on the tractor to cater for the attachment of different implements. One example of such a rear hitch is disclosed in US-2004/0155430. Different couplings are shown including a ball type coupling and a post type coupling.

It is an object of the present invention to provide an improved form of tractor hitch which overcomes the above problem.

Thus in accordance with the present invention there is provided a rear hitch for a tractor comprising a pair of vertically extending and laterally spaced rails designed to be secured to the rear of a tractor, the rails each comprising an upwardly facing support surface to support an operative implement connector for the attachment of an implement, wherein the implement connector comprises a connecting ball, pin or other formation mounted on a plate designed to be supported between the rails with the plate in a generally horizontal orientation when operative, the rails further comprising a pair of vertical slots for accommodating a vertically adjustable jaw hitch, the hitch being **characterised in that** the rails are also adapted to support, in addition to the operative implement connector, one or more non-operative implement connectors wherein, in addition to said pair of vertical slots, one or more pairs of dedicated slots are provided in the rails into which the plates of non-operative connectors can be inserted for storage on the hitch.

A rear hitch in accordance with the present invention thus enables a tractor to easily transport several implement connectors in a secure manner when they are non-operative.

The rails are conveniently provided with one or more pairs of slots into which the plates of non-operative connectors can be inserted for storage on the hitch. The rails are provided with a pair of generally horizontally extending upwardly facing support surfaces to vertically support end portions of the plate of an operative connector, and interengaging formations are provided on the plate and carried by the rails to support the plate against horizontal movement and tipping movement relative to the support surfaces when the ball, pin or other formation on the plate is in use.

The interengaging formations may conveniently comprise vertically upwardly extending projections on the support surfaces which engage cut-outs in the ends of the plate to support the plate against horizontal movement relative to the support surfaces, and vertically downwardly extending projections located and above and spaced from the support surfaces to receive the plate between the support surfaces and the lower ends of the vertically downwardly extending projections to control tipping of the plate relative to the support surfaces.

A draw bar support means may be at least partially supported from the rails with a draw bar extending in the generally fore and aft direction, the draw bar being secured to the support means by a latch or pin which engages an aperture in the draw bar, the latch or pin being withdrawable from the aperture by movement of a handle accessible from the rear of the hitch.

Conveniently the latch or pin is withdrawable from the aperture by a cam means which is moved by the handle.

The draw bar support means preferably carries a keeper to hold any implement connected with the ball, pin or other formation in position on the ball, pin or other connection during use of the implement.

The side rails may also be designed to support a jaw type hitch therebetween.

One embodiment of the present invention will now be described, by way of example only, with reference to the accompanying drawings in which:
Figure 1 shows a perspective view of a tractor rear hitch in accordance with the present invention;
Figures 2, 3 and 4 show perspective, rear and part-sectional views of the basic frame of the hitch shown in figure 1;
Figures 5 and 6 show perspective views in greater detail of implement connector mounting arrangements used in the hitch of figures 2 to 4;
Figures 7 and 8 show examples of alternative forms of implement connector used in the hitch of figures 2 to 4;
Figures 9 to 14 show the attachment of an implement connector to the hitch frame;
Figure 15 shows a perspective view of a draw bar support means and associated latching pin which are also supported from the hitch of the present invention;
Figures 16 and 17 show sectional views through the draw bar support means of figure 15 showing how the draw bar latch pin is disengaged;
Figure 18 shows a further perspective view of a tractor hitch in accordance with the present invention with a jaw type hitch also supported between the vertical rails of the hitch;
Figures 19 and 20 show perspective views of an alternative draw bar support and mounting plate arrangement; and
Figures 21 to 24 show details of a mounting plate arrangement for use with towing pins or towing balls.

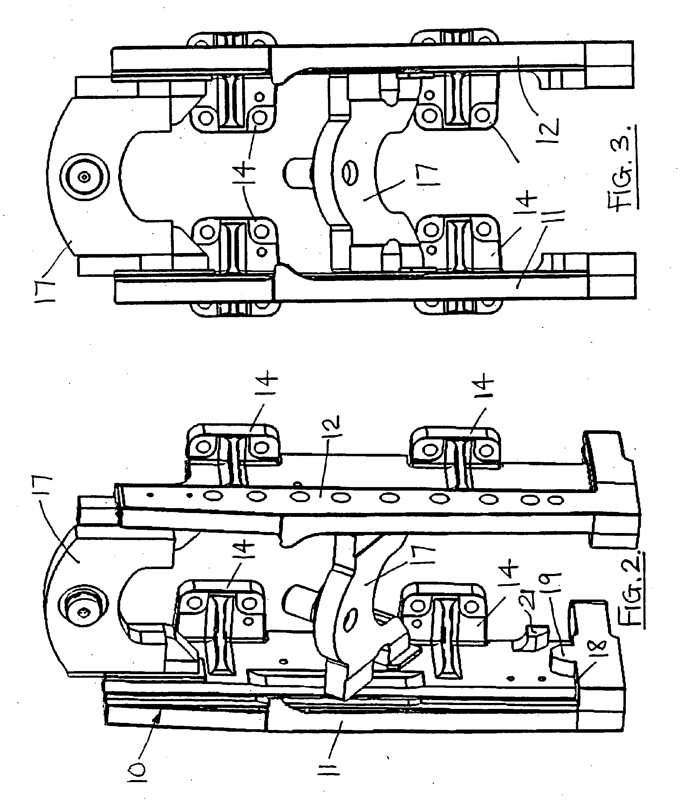

Referring to the drawings, the tractor rear hitch 10 comprises a pair of vertically extending spaced rails 11 and 12 which are secured to the rear of the tractor axle housing 13 by bolts extending through flanges 14. Supported between the rails 11 and 12 is an implement connector 15 which comprises a coupling pin 16 mounted on a plate 17 which is held in a generally horizontal position between the rails. Figures 2 to 6 show the basic rail structure in more detail. The plate 17 of the operative implement connector 15 is supported on a pair of generally horizontally extending upwardly facing support surfaces 18 which each carry a vertically upwardly extending projection 19 which extends into a corresponding cut out 20 provided at each end of the plate 17. Also mounted above each support surface 18 is a downwardly extending projection 21 which receives the plate 17 between its lower end 22 and the upper surface 18.

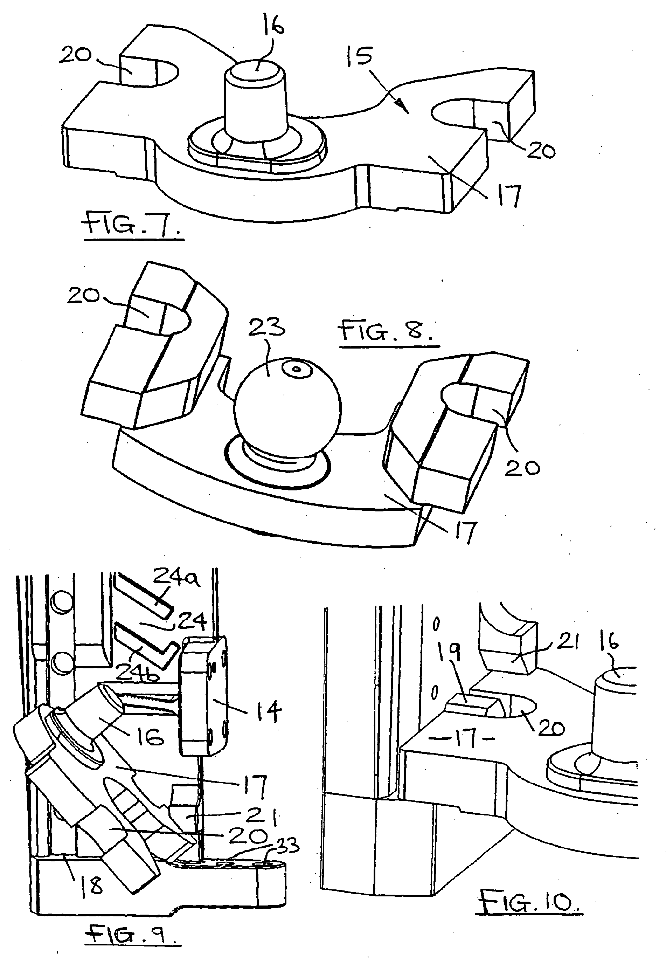

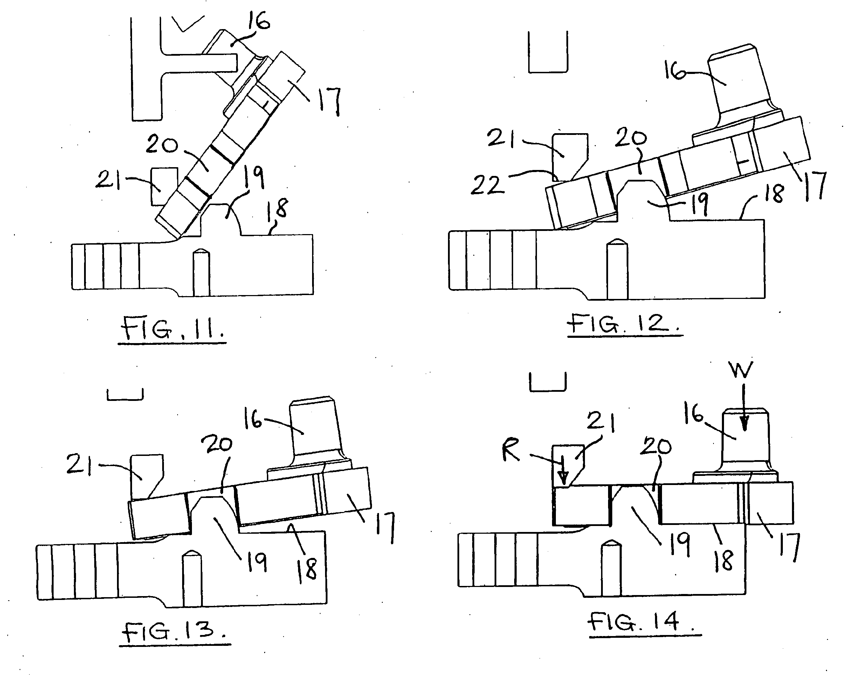

Figures 9 to 14 show the manner in which the plate 17 is inserted into its operational position on the support surfaces 18. The sequence of movements is best illustrated in figures 11 to 14 where it can be seen that the plate 17 is locate between the projections 19 and 21 and then tipped downwardly so that the projections 19 enter the cutouts 20 and the plate is trapped below the downwardly extending projections 21 so that when weight is applied to the pin 16, as indicated by the arrow W in figure 14, this is reacted by the force illustrated by the arrow R so that the plate 17 does not tip on the support surfaces 18 and is held by horizontal movement on the support surfaces by the engagement of projections 19 in cutouts 20. Thus it will be appreciated that it is an easy process to change the implement connector 15 as may be required if a different implement is to be towed by the tractor.

Figures 7 and 8 show, for example, two examples of alternative forms of implement connector 15. In figure 7 the simple pin 16 is used and in figure 8 a simple ball 23 is used. In the figure 8 arrangement the ball is mounted at a lower level than the portion of the plate 17 which contain the cutouts 20. Such an arrangement allows the effective height of the implement coupling to be adjusted if this is necessary.

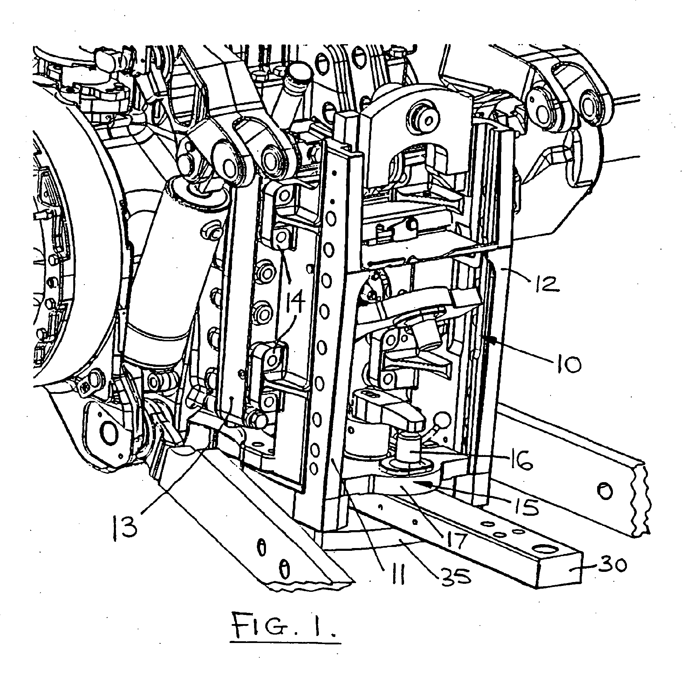

In accordance with the present invention the side rails 11 and 12 are provide with pairs of slots 24 and 25 defined by ridges 24a, 24b and 25a, 25b between which the ends of the plates 17 of the implement connectors can be inserted so that non-operative implement connectors can be stowed between the rails of the hitch as shown , for example, in figures 1 to 4. Thus, for example, an operative implement may be supported on support surfaces 18 and two non-operative and alternative implement connectors store in the slots 24 and 25. Although in figures 1 to 4 ridges 25a, 25b extend generally vertically they could, for example, extend generally parallel to ridges 24a, 24b to support another plate generally parallel to the lower plate 17 supported between ridges 24a,24b.

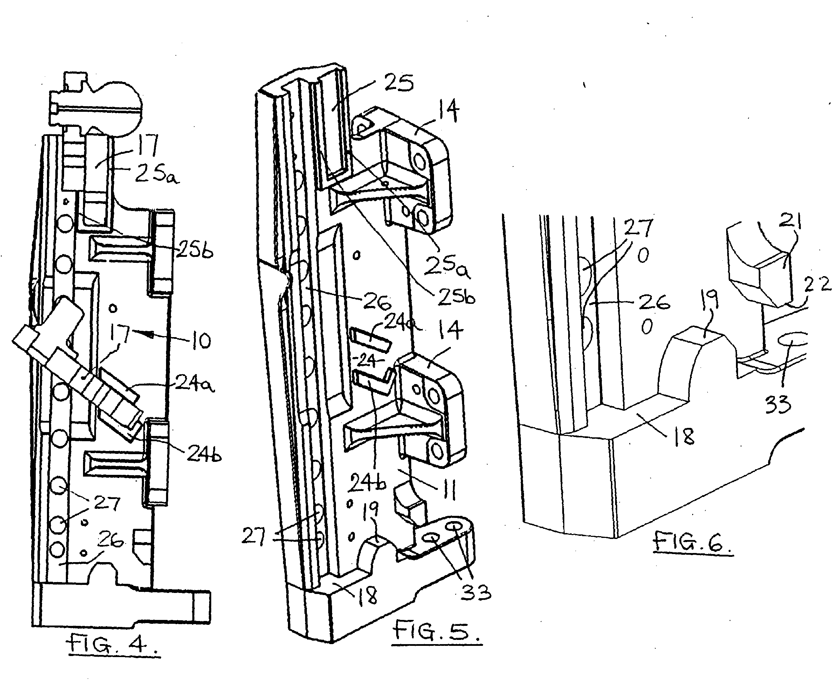

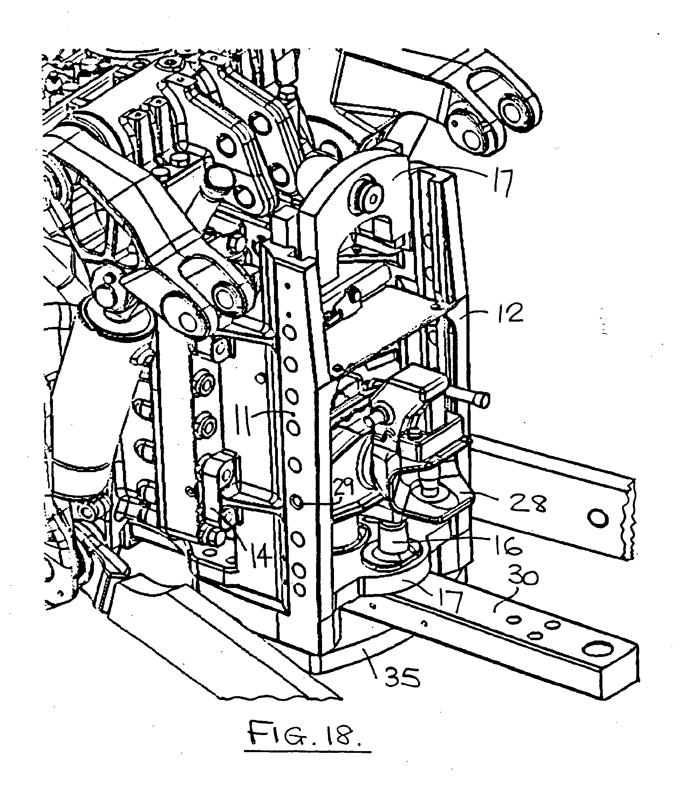

As can be seen from figures 4 and 5 each side rail 11, 12 is provided with a vertical slot 26 containing a number of spaced holes 27. These slots are designed to accommodate the ends of a known type of jaw hitch 28 (shown in figure 18) which has mounting pins 29 which engage the holes 27 to allow the height of the hitch relative to the side rails to be adjusted.

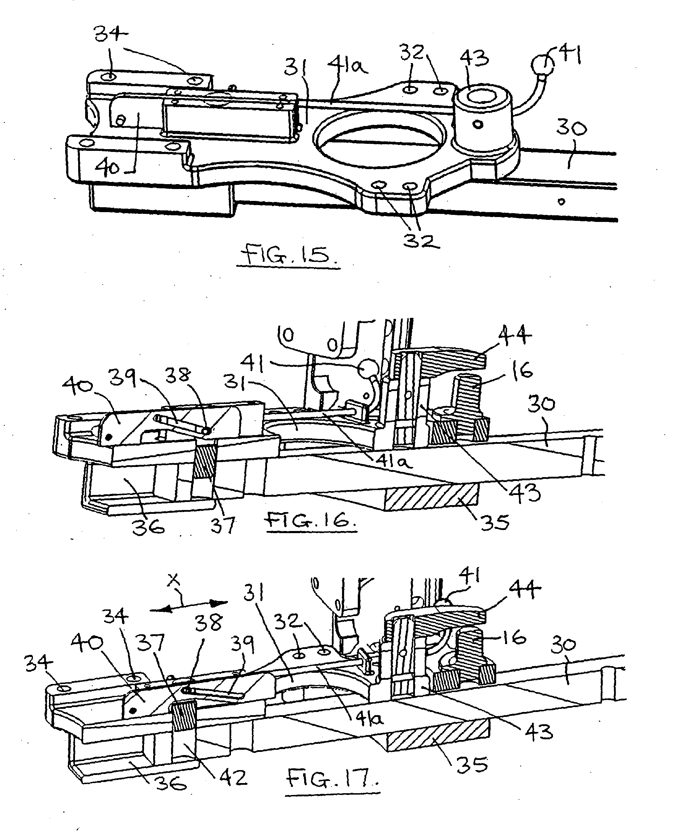

In addition to the jaw hitch 28 the tractor rear hitch can also support a draw bar 30 which is mounted on a draw bar support 31 (see figures 15 to 17) which is in turn secured by bolts extending through holes 32 in support 31 and corresponding holes 33 at the bottom of the side rails 11 and 12 and best send in figure 5. Additionally the draw bar support is supported by bolts which extend through holes 34 at the front end of the support and are screwed in to the underside of the tractor rear axle housing.

The draw bar 30 extends above a plate 35 secured to the lower ends of the rails 11 and into a socket 36 formed in the forward end of the draw bar support. The drawbar is locked to the draw bar support 31 by a pin 37 which is pinned at 38 into a cam slot 39 cut in a cam plate 40 which is moved in direction X of figures 16 and 17 by a handle 41 which is accessible from the rear of the tractor hitch and which is connected with plate 40 by rod 41a. Thus in order to move the locking pin 37 vertically the handle 41 is pulled towards the rear of the tractor to move the cam plate 40 towards the rear of the tractor and thus cause the pinned connection 38 to move vertically in the cam track 39 thus raising the locking pin out of the operative hole 42 in the draw bar 30 which allows the draw bar to be easily removed from the tractor or to be positioned in a variety of different locations depending on the position of the operative aperture 42 which is engaged. As is well known the draw bar may also be reversible to cater for different sizes of draw bar hole etc.

The draw bar support 31 carries a hollow post 43 on which a keeper 44 is mounted. This keeper ensures that any implement connected with the associated pin 16 cannot disengage the pin when in use.

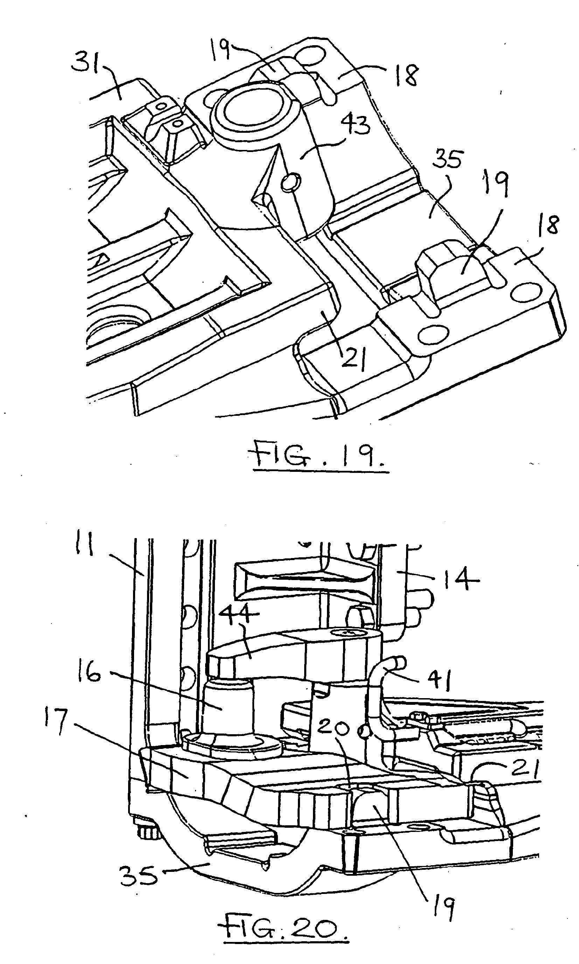

Figures 19 and 20 show an alternative form of draw bar support 31 in which the plate 17 is prevented from tipping during use of the pin 16 by a ledge 21 built into the support 31 which replaces the previously described projections 21. The ledge 21 overhangs the foremost edge of the plate 17. The projections 19 may be integral with the support 31 or formed separately and bolted or otherwise secured thereto. The projections 19 on the rails 11 and 12 may also be separately formed if desired.

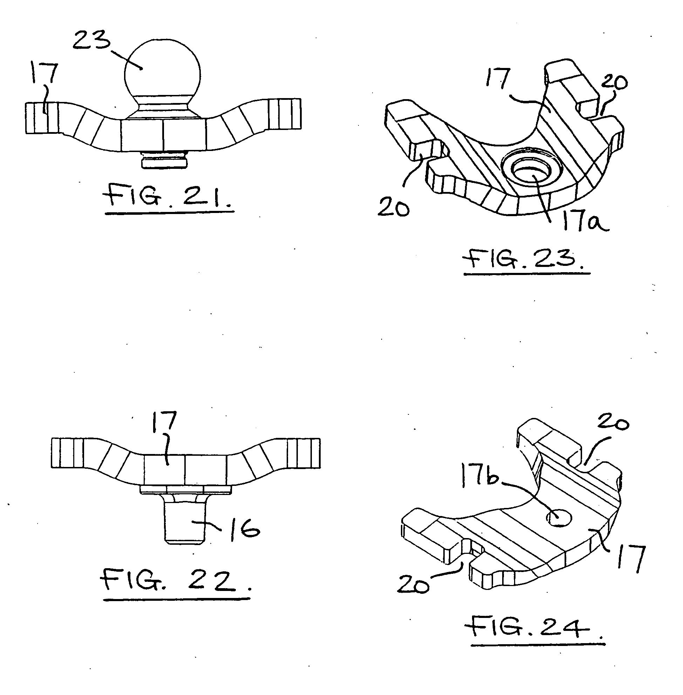

Figures 21 to 24 show views of how a standard plate 17 can be machined to accept either a pin 16 or coupling ball 23. As is clear from Figures 23 and 24 the only difference between the plates is the machining to take either a pin or ball. The hole 17a which receives the ball 23 is larger in diameter than the hole 17b which receives the pin 16.

As will be appreciated from the above the present invention thus provides a tractor rear hitch which enables a variety of different implement connectors to be easily mounted and removed therefrom and also provides a storage facility for non-operative implement connectors. Further the hitch allows the connection of a draw bar using a cam operated locking pin and also allows the use of a vertically slideable hitch jaw.

## Claims

1. A rear hitch (10) for a tractor comprising a pair of vertically extending and laterally spaced rails (11,12) designed to be secured to the rear (13) of a tractor, the rails each comprising an upwardly facing support surface (18) to support an operative implement connector (15) for the attachment of an implement, wherein the implement connector (15) comprises a connecting ball, pin or other formation (16,23) mounted on a plate (17) designed to be supported between the rails (11,12) with the plate (17) in a generally horizontal orientation when operative, the rails further comprising a pair of vertical slots (26) for accommodating a vertically adjustable jaw hitch (28), the hitch wherein the rails (11,12) are also adapted (24,25) to support, in addition to the operative implement connector (15), one or more non-operative implement connectors (15) **characterised in that** in addition to said pair of vertical slots, one or more pairs of dedicated slots (24,25) are provided in the rails (11,12) into which the plates (17) of non-operative connectors (15) can be inserted for storage on the hitch.

2. A hitch according to Claim 1, wherein at least one pair of slots is inclined downwardly.

3. A hitch according to Claim 1 or 2 in which interengaging formations (19,20,21) are provided on the plate of the operative implement connector and carried by the rails to support the plate against horizontal movement and tipping movement relative to the support surfaces (18) when the ball, pin or other formation (16,23) on the plate is in use.

4. A hitch according to Claim 3 in which the interengaging formations comprise vertically upwardly extending projections (19) on the support surfaces (18) which engage cut-outs (20) in the ends of the plate (17) to support the plate against horizontal movement relative to the support surfaces, and vertically downwardly extending projections (21) located above and spaced from the support surfaces (18) to receive the plate (17) between the support surfaces and the lower ends (22) of the vertically downwardly extending projections.

5. A hitch according to any one of Claims 1 to 4 in which a drawbar support means (31) is at least partially supported from the rails (11,12) with a drawbar (30) extending in a generally fore and aft direction, the drawbar being secured to the support means by a latch or pin (37) which engages an aperture (42) in the drawbar (30), the latch or pin (37) being withdrawable from the aperture (42) by movement of a handle accessible from the rear of the hitch.

6. A hitch according to Claim 5 in which the latch or pin (37) is withdrawn from the aperture (42) by a cam means (38,39,40) which is moved by the handle (41).

7. A hitch according to Claim 5 or 6 in which the draw bar support (31) is provided with a pair of generally horizontally extending upwardly facing support surfaces (18) to vertically support end portions of the plate (17) of an operative connector (15), and interengaging formations (19,20,21) are provided on the support (31) and plate (17) to support the plate (17) against horizontal movement and tipping movement relative to the support surfaces when the ball, pin or other formation (16,23) on the plate (17) is in use.

8. A hitch according to Claim 7 in which the interengaging formations comprise vertically upwardly extending projections (19) on the support surfaces (18) with engage cut-outs (20) in the ends of the plate (17) to support the plate against horizontal movement relative to the support surface and projections (21) on the support (31) which extend over a portion of the plate (17) to prevent tipping of the plate.

9. A hitch according to any one Claims 5 to 8 in which the drawbar support means (31) carries a keeper (44) to hold any implement connected with the ball, pin or other formation (16,23) in position on the ball, pin or other connection during use of the implement.

## Patentansprüche

1. Rückseitige Anbauvorrichtung (10) für ein Zugfahrzeug, insbesondere einen Traktor, mit einem Paar von sich vertikal erstreckenden und lateral beabstandeten Führungsschienen, Führungsschienen oder Elementen (11, 12) (im Folgenden "Führungsschienen"), die geeignet gestaltet sind, um an der Rückseite (13) des Zugfahrzeugs gesichert oder befestigt zu werden, wobei die Führungsschienen jeweils eine nach oben weisende Abstützfläche (18) zur Abstützung eines im Betrieb befindlichen Verbindungselements (15) zur Befestigung eines Werkzeugs oder Geräts (im Folgenden "Gerät") aufweist und das Verbindungselement (15) eine verbindende Kugel, einen Pin oder ein anderes Organ oder ein anderes Gebilde (16, 23) aufweist, welches an einer Platte (17) montiert ist, die geeignet gestaltet ist, um zwischen den Führungsschienen (11, 12) abgestützt zu werden, wobei die Platte (17) eine grundsätzlich horizontale Orientierung besitzt, wenn diese im Betrieb ist, und wobei die Führungsschienen ein Paar von vertikalen Schlitzen (26) aufweisen zur Aufnahme einer vertikal einstellbaren Backen-Anbauvorrichtung (28), wobei die Führungsschienen (11, 12) geeignet angepasst oder gestaltet sind zum Abstützen von mindestens einem nicht im Betrieb befindlichen Verbindungselement (15) für ein Gerät oder Werkzeug zusätzlich zu dem im Betrieb befindlichen Verbindungselement (15), **dadurch gekennzeichnet, dass** zusätzlich zu dem Paar vertikaler Schlitze mindestens ein Paar Schlitze (24, 25) in den Führungsschienen (11, 12) vorgesehen ist, in welche die Platten (17) von nicht betriebenen Verbindungselementen (15) eingesetzt werden können zur Bevorratung derselben an, auf oder in der Anbauvorrichtung.

2. Anbauvorrichtung nach Anspruch 1, **dadurch gekennzeichnet, dass** zumindest ein Paar Schlitze abwärts geneigt ist.

3. Anbauvorrichtung nach Anspruch 1 oder 2, **dadurch gekennzeichnet, dass** ineinander eingreifende oder miteinander in Wechselwirkung tretenden Ausbildungen (19, 20, 21) an der Platte des im Betrieb befindlichen Verbindungselements vorgesehen sind und von den Führungsschienen getragen sind zur Abstützung der Platte gegenüber einer horizontalen Bewegung und gegenüber einer kippenden Bewegung relativ zu den Abstützflächen (18), wenn die Kugel, der Pin oder das andere Organ (16, 23) auf oder an der Platte im Gebrauch ist.

4. Anbauvorrichtung nach Anspruch 3, **dadurch gekennzeichnet, dass** die ineinander eingreifenden oder in Wechselwirkung tretenden Ausbildungen sich vertikal aufwärts erstreckende Vorsprünge (19) auf oder an den Abstützflächen (18) aufweisen, die eingreifen in Aussparungen (20) in den Enden der Platte (17) zur Abstützung der Platte gegenüber einer horizontalen Bewegung relativ zu den Abstützflächen, und vertikal nach unten erstreckende Vorsprünge (21), die über und beabstandet von den Abstützflächen (18) angeordnet sind zur Aufnahme der Platte (17) zwischen den Abstützflächen und den unteren Enden (22) der sich vertikal nach unten erstreckenden Vorsprünge.

5. Anbauvorrichtung nach einem der Ansprüche 1 bis 4, **dadurch gekennzeichnet, dass** ein Abstützorgan (31) für eine Deichsel oder ein Kuppelorgan zumindest teilweise abgestützt ist durch die Führungsschienen (11, 12) mit einer Deichsel oder einem Kuppelelement (30), welches sich in grundsätzlich vorwärtige und rückwärtige Richtung erstreckt, wobei die Deichsel oder das Kuppelelement an dem Abstützorgan durch ein Rast-, Sperr- oder Verriegelungselement oder einen Pin (37) befestigt oder gesichert ist, welcher oder welches eingreift in eine Öffnung (42) in der Deichsel oder dem Kuppelelement (30), wobei das Rast-, Sperr- oder Verriegelungselement oder der Pin (37) zurückziehbar oder entfernbar ist aus der Öffnung (42) durch Bewegung eines Handbetätigungsorgans, welches von der Rückseite der Anbauvorrichtung zugänglich ist.

6. Anbauvorrichtung nach Anspruch 5, **dadurch gekennzeichnet, dass** das Rast-, Sperroder Verriegelungselement oder der Pin (37) aus der Öffnung (42) zurückgezogen wird oder aus dieser beseitigt wird durch ein Nockenorgan (38, 39, 40), welches durch das Handbetätigungsorgan (41) bewegt wird.

7. Anbauvorrichtung nach Anspruch 5 oder 6, **dadurch gekennzeichnet, dass** die Abstützung (31) für die Deichsel oder das Kuppelelement mit einem Paar von sich grundsätzlich horizontal erstreckenden, nach oben weisenden Abstützflächen (18) ausgestattet ist zur vertikalen Abstützung von Endbereichen der Platte (17) des im Betrieb befindlichen Verbindungselements (15) und dass ineinander eingreifende oder in Wechselwirkung tretende Ausbildungen oder Organe (19, 20, 21) an der Abstützung (31) und der Platte (17) vorgesehen sind zur Abstützung der Platte (17) gegen eine horizontale Bewegung und eine kippende Bewegung relativ zu den Abstützflächen, wenn die Kugel, der Pin oder das anderweitige Organ (16, 23) auf oder an der Platte (17) im Gebrauch ist.

8. Anbauvorrichtung nach Anspruch 7, **dadurch gekennzeichnet, dass** die ineinander eingreifenden oder in Wechselwirkung tretenden Formationen oder Organe sich vertikal aufwärts erstreckende Vorsprünge (19) auf oder an den Abstützflächen (18) aufweisen, die eingreifen oder in Wechselwirkung treten mit Aussparungen (20) in den Enden der Platte (17) zur Abstützung der Platte gegenüber einer horizontalen Bewegung relativ zu der Abstützfläche, und Vorsprünge (21) auf oder an der Abstützung (31) aufweisen, die sich über einen Bereich der Platte (17) erstrecken zur Vermeidung eines Kippens der Platte.

9. Anbauvorrichtung nach einem der Ansprüche,5 bis 8 **dadurch gekennzeichnet, dass** das Abstützorgan (31) für die Deichsel oder das Kuppelelement einen Halter (44) trägt zum Halten eines beliebigen Geräts oder Werkzeugs, welches mit der Kugel, dem Pin oder des anderen Organs (16, 23) verbunden ist, in Position auf oder an der Kugel, dem Pin oder der anderen Verbindung während des Gebrauchs des Geräts oder Werkzeugs ausgestattet ist.

## Revendications

1. Attelage arrière (10) pour un tracteur comprenant une paire de rails s'étendant verticalement et espacés latéralement (11, 12) conçu de manière à être fixé à l'arrière (13) d'un tracteur, les rails comprenant chacun une surface de support orientée vers le haut (18) afin de supporter un coupleur d'outil opérationnel (15) de manière à assurer la fixation d'un outil, dans lequel le coupleur d'outil (15) comprend une sphère, une broche ou autre structure de liaison (16, 23) montée sur une plaque (17) conçue de manière à être supportée entre les rails (11, 12), la plaque (17) étant suivant une orientation sensiblement horizontale lorsqu'elle est opérationnelle, les rails comprenant, en outre, une paire de fentes verticales (26) destinées à recevoir un attelage à mâchoire pouvant être ajusté verticalement (28), l'attelage dans lequel les rails (11, 12) sont aussi adaptés (24, 25) afin de supporter, en plus du coupleur d'outil opérationnel (15), un ou plusieurs coupleurs d'outil non opérationnels (15) **caractérisé en ce que**, en plus de ladite paire de fentes verticales, une ou plusieurs paires de fentes dédiées (24, 25) sont formées sur les rails (11, 12) dans lesquelles les plaques (17) de coupleurs non opérationnels (15) peuvent être insérées en vue du stockage sur l'attelage.

2. Attelage selon la revendication 1, dans lequel au moins une paire de fentes est inclinée vers le bas.

3. Attelage selon la revendication 1 ou 2, dans lequel des structures conjuguées (19, 20, 21) sont formées sur la plaque du coupleur d'outil opérationnel et supportées par les rails afin d'empêcher à la plaque un mouvement horizontal et un mouvement basculant par rapport aux surfaces de support (18) lorsque la sphère, broche ou autre structure (16, 23) sur la plaque est utilisée.

4. Attelage selon la revendication 3, dans lequel les structures de couplage conjuguées comprennent des saillies s'étendant verticalement vers le haut (19) sur les surfaces de support (18) qui sont couplées à des découpes (20) sur les extrémités de la plaque (17) afin d'empêcher à la plaque un mouvement horizontal par rapport aux surfaces de support, et des saillies s'étendant verticalement vers le bas (21) situées au-dessus des surfaces de support (18) et séparées de ces dernières afin de recevoir la plaque (17) entre les surfaces de support et les extrémités inférieures (22) des saillies s'étendant verticalement vers le bas.

5. Attelage selon l'une quelconque des revendications 1 à 4, dans lequel un moyen de support de barre de traction (31) est supporté au moins partiellement par les rails (11, 12) avec une barre de traction (30) s'étendant dans une direction sensiblement longitudinale, la barre de traction étant fixée sur le moyen de support par un verrou ou broche (37) qui est couplé à une ouverture (42) sur la barre de traction (30), le verrou ou broche (37) pouvant être retiré de l'ouverture (42) par le mouvement d'une poignée accessible depuis l'arrière de l'attelage.

6. Attelage selon la revendication 5, dans lequel le verrou ou broche (37) est retiré de l'ouverture (42) par un moyen formant came (38, 39, 40) qui est déplacé par la poignée (41).

7. Attelage selon la revendication 5 ou 6, dans lequel le support de barre de traction (31) comporte une paire de surfaces de support orientées vers le haut et s'étendant sensiblement horizontalement (18) afin de supporter verticalement des parties d'extrémité de la plaque (17) d'un coupleur opérationnel (15), et des structures de couplage conjuguées (19, 20, 21) sont formées sur le support (31) et la plaque (17) afin d'empêcher à la plaque (17) un mouvement horizontal et un mouvement basculant par rapport aux surfaces de support lorsque la sphère, broche ou autre structure (16, 23) sur la plaque (17) est utilisée.

8. Attelage selon la revendication 7, dans lequel les structures de couplage conjuguées comprennent des saillies s'étendant verticalement vers le haut (19) sur les surfaces de support (18) qui se couplent aux découpes (20) sur les extrémités de la plaque (17) afin d'empêcher à la plaque un mouvement horizontal par rapport à la surface de support et des saillies (21) sur le support (31) qui s'étendent sur une partie de la plaque (17) afin d'empêcher le basculement de la plaque.

9. Attelage selon l'une quelconque des revendications 5 à 8, dans lequel le moyen de support de barre de traction (31) supporte un dispositif de retenue (44) destiné à supporter un outil quelconque, couplé avec la sphère, broche ou autre structure (16, 23), en position sur la sphère, broche ou autre dispositif de liaison au cours de l'utilisation de l'outil.
